# EUROPÄISCHE PATENTSCHRIFT

(11) **EP 3 491 086 B1**
(45) Veröffentlichungstag und Bekanntmachung des Hinweises auf die Patenterteilung: **18.10.2023**
(21) Anmeldenummer: 17740005.8
(22) Anmeldetag: 17.07.2017
(51) Int. Cl.: C09J 7/29, C08K 3/38, B32B 23/00, B32B 23/08, B32B 27/08, B32B 27/20

(54) **KLEBEBAND ZUR VERKAPSELUNG ELEKTRONISCHER AUFBAUTEN**
ADHESIVE TAPE FOR ENCAPSULATING ELECTRONIC CONSTRUCTIONS
RUBAN ADHÉSIF POUR ENCAPSULER DES MONTAGES ÉLECTRONIQUES

(30) Priorität: 27.07.2016 DE 102016213840
(43) Veröffentlichungstag der Anmeldung: 05.06.2019
(73) Patentinhaber: TESA SE, 22848 Norderstedt (DE)
(72) Erfinder: SCHUH, Christian, 22767 Hamburg (DE); KRAWINKEL, Thorsten, 22457 Hamburg (DE)
(74) Vertreter: tesa SE
(86) Internationale Anmeldenummer: PCT/EP2017/067986
(87) Internationale Veröffentlichungsnummer: WO 2018/019631

(56) Entgegenhaltungen:
- WO-A1-2014/095387
- WO-A1-2015/106940

## Beschreibung

Die vorliegende Erfindung betrifft das technische Gebiet der Verkapselungsmaterialien zum Schutz elektronischer Anordnungen. Es wird ein für diesen Zweck geeigneter Klebebandaufbau vorgeschlagen, der es insbesondere ermöglicht, weiche Klebmassen zu verwenden und gleichzeitig eine Schutzfunktion gegenüber permeationsfähigen Substanzen vorzuhalten.

Optoelektronische Anordnungen werden immer häufiger in kommerziellen Produkten verwendet oder stehen kurz vor der Markteinführung. Derartige Anordnungen umfassen anorganische oder organische elektronische Strukturen, beispielsweise organische, metallorganische oder polymere Halbleiter oder auch Kombinationen davon. Die entsprechenden Produkte sind je nach gewünschter Anwendung starr oder flexibel ausgebildet, wobei eine zunehmende Nachfrage nach flexiblen Anordnungen besteht. Die Herstellung derartiger Anordnungen erfolgt häufig durch Druckverfahren wie Hochdruck, Tiefdruck, Siebdruck, Flachdruck oder auch so genanntes "non impact printing" wie etwa Thermotransferdruck, Tintenstrahldruck oder Digitaldruck. Vielfach werden aber auch Vakuumverfahren wie beispielsweise Chemical Vapor Deposition (CVD), Physical Vapor Deposition (PVD), plasmaunterstützte chemische oder physikalische Depositionsverfahren (PECVD), Sputtern, (Plasma-)Ätzen oder Bedampfung verwendet. Die Strukturierung erfolgt in der Regel durch Masken.

Als Beispiele für bereits kommerziell erhältliche oder in ihrem Marktpotential interessante optoelektronische Anwendungen seien hier elektrophoretische oder elektrochrome Aufbauten oder Displays, organische oder polymere Leuchtdioden (OLEDs oder PLEDs) in Anzeige- und Display-Vorrichtungen oder als Beleuchtung genannt, ferner Elektrolumineszenzlampen, Licht emittierende elektrochemische Zellen (LEECs), organische Solarzellen wie Farbstoff- oder Polymersolarzellen, anorganische Solarzellen, insbesondere Dünnschichtsolarzellen, zum Beispiel auf der Basis von Silizium, Germanium, Kupfer, Indium und Selen, organische Feldeffekt-Transistoren, organische Schaltelemente, organische optische Verstärker, organische Laserdioden, organische oder anorganische Sensoren oder auch organisch- oder anorganisch basierte RFID-Transponder angeführt.

Als technische Herausforderung für die Realisierung einer ausreichenden Lebensdauer und Funktion von optoelektronischen Anordnungen auf dem Gebiet der anorganischen und organischen Optoelektronik, ganz besonders der organischen Optoelektronik, ist ein Schutz der darin enthaltenen Komponenten vor Permeaten zu sehen. Als Permeate werden dabei in der Regel gasförmige oder flüssige Stoffe angesehen, die in einen Festkörper eindringen und diesen gegebenenfalls durchdringen beziehungsweise durchwandern. Dementsprechend können viele niedermolekulare organische oder anorganische Verbindungen Permeate sein, wobei im vorliegend beschriebenen Zusammenhang Wasserdampf von besonderer Bedeutung ist.

Eine Vielzahl von optoelektronischen Anordnungen - besonders bei Verwendung von organischen Materialien - ist sowohl gegen Wasserdampf als auch gegen Sauerstoff empfindlich. Während der Lebensdauer der elektronischen Anordnungen ist deshalb ein Schutz durch eine Verkapselung erforderlich, da andernfalls die Leistung über den Anwendungszeitraum nachlässt. Bei mangelhaftem Schutz können sich beispielsweise durch Oxidations- oder Hydrolyseprozesse bei Elektrolumineszenz-Lampen (EL-Lampen) oder organischen Leuchtdioden (OLED) die Leuchtkraft, bei elektrophoretischen Displays (EP-Displays) der Kontrast oder bei Solarzellen die Effizienz innerhalb kurzer Zeit drastisch verringern.

Auf dem Gebiet der anorganischen und insbesondere der organischen Optoelektronik gibt es daher einen hohen Bedarf für flexible Klebelösungen, die eine Barriere für Permeate wie Sauerstoff und/oder Wasserdampf darstellen. Im Stand der Technik sind bereits einige Ansätze für derartige Klebelösungen zu finden.

So werden häufiger Flüssigklebstoffe auf Basis von Epoxiden als Barriereklebemassen verwendet, wie sie beispielsweise in WO 98/21287 A1, US 4,051,195 und US 4,552,604 beschrieben sind. Ihr Haupteinsatzgebiet sind Randverklebungen starrer Anordnungen, aber auch mäßig flexibler Anordnungen. Die Aushärtung erfolgt thermisch oder mittels UV-Strahlung.

Der Einsatz dieser flüssigen Klebstoffe bringt allerdings auch eine Reihe von unerwünschten Effekten mit sich. So können niedermolekulare Bestandteile (VOCs - volatile organic compounds) die empfindlichen elektronischen Strukturen der Anordnung schädigen und die Produktion erschweren. Der Klebstoff muss darüber hinaus aufwändig auf jeden einzelnen Bestandteil der Anordnung aufgebracht werden. Die Anschaffung von teuren Dispensern und Fixiereinrichtungen ist notwendig, um eine genaue Positionierung zu gewährleisten. Die Art der Auftragung verhindert zudem einen schnellen kontinuierlichen Prozess. Im anschließend erforderlichen Laminationsschritt kann aufgrund der geringen Viskosität das Erreichen einer definierten Schichtdicke und Verklebungsbreite erschwert sein.

Eine Alternative ist der Einsatz von Haft- oder Heißschmelzklebern zur Versiegelung von optoelektronischen Aufbauten. Unter den Haftklebemassen werden dabei bevorzugt solche eingesetzt, die nach der Verklebung durch eingebrachte Energie (zum Beispiel aktinische Strahlung oder Wärme) vernetzbar sind. Derartige Massen werden beispielsweise in US 2006/0100299 A1 und WO 2007/087281 A1 beschrieben. Ihr Vorteil liegt insbesondere darin, dass durch die Vernetzung die Barrierewirkung der Klebemassen verbessert werden kann.

Auch die Verwendung von Heißschmelzklebemassen ist im Stand der Technik bekannt. Vielfach werden hier Copolymere des Ethylens eingesetzt, zum Beispiel Ethylen-Ethylacetat (EEA), Ethylen-Acrylsäure-Copolymer (EAA), Ethylen-Butylacrylat (EBA) oder Ethylen-Methylacrylat (EMA). Insbesondere für auf Siliziumwafern basierende Solarzellenmodule werden in der Regel vernetzende Ethylen-Vinylacetat-(EVA)-Copolymere eingesetzt. Die Vernetzung findet während des Versiegelungsprozesses unter Druck und bei Temperaturen oberhalb von etwa 120° C statt. Dieser Prozess ist für viele auf organischen Halbleitern basierende oder in Dünnschichtverfahren hergestellte optoelektronische Aufbauten aufgrund der hohen Temperaturen und der mechanischen Belastung durch den Druck nachteilig.

Heißschmelzklebemassen auf der Basis von Blockcopolymeren oder funktionalisierten Polymeren sind beispielsweise in WO 2008/036707 A2, WO 2003/002684 A1, JP 2005-298703 A und US 2004/0216778 A1 beschrieben. Ein Vorteil dieser Klebemassen ist, dass durch die Klebstoffe selbst keine oder nur sehr wenig Substanz in den zu verkapselnden Aufbau eingebracht wird, die den Aufbau selbst schädigt, wohingegen dieses Problem vor allem bei reaktiven Flüssigklebersystemen, insbesondere solchen auf Acrylat- oder Epoxidharzbasis, relevant ist. Aufgrund der hohen Anzahl reaktiver Gruppen weisen die letztgenannten Systeme eine relativ hohe Polarität auf, so dass insbesondere Wasser darin enthalten ist. Die Menge liegt in der Regel im Bereich von weniger als 100 ppm bis hin zu mehr als 1 %. Unter anderem auch aus diesem Grund werden solche Flüssigkleber vornehmlich als Randversiegelung der elektronischen Anordnungen eingesetzt, wobei sie nicht in direktem Kontakt mit den aktiven elektronischen Materialien stehen.

Eine weitere Möglichkeit, der Problematik eingeschleppter Permeate zu begegnen, besteht darin, zusätzlich noch ein absorbierendes Material - einen sogenannten Getter - innerhalb der Verkapselung einzuschließen, welches aus dem Klebstoff herausdiffundierendes oder hindurchpermeierendes Wasser oder andere Permeate bindet, indem es sie zum Beispiel absorbiert oder adsorbiert. Ein solches Vorgehen wird unter anderem in EP1407818 A1, US 2003/0057574 A1 und in US 2004/0169174 A1 angedeutet. Die Ausstattung eines Klebstoffs mit Permeat-bindenden Substanzen beziehungsweise Eigenschaften wird darüber hinaus beispielsweise in JP 07-169567, WO 98/01910 A1, WO 03/088371 A2, US 2004-0104673 A1, WO 03/065470 A1, JP 04-296381, US 6833668, DE 102008062130 A1, DE 102008060113 A1 und DE 102008047964 A1 beschrieben.

DE 196 46 048 A1 beschreibt ein Verpackungslaminat für Transdermale Therapeutische Systeme, das ein in einer flächenförmigen Schicht dispergiert enthaltenes Trockenmittel umfasst, wobei diese Schicht durch Vermittlung einer kleberbeschichteten Folie auf dem Verpackungslaminat befestigt ist. Das Verpackungslaminat trocknet den Gasraum in der Verpackung.

DE 199 13 761 A1 beschreibt eine flächenförmige Trocknungsvorrichtung zum Trocknen eines umgebenden Gasraums, die eine Matrix mit einem darin enthaltenen Trockenmittel umfasst, wobei die Matrix auch ein Haftklebstoff sein kann.

Ein grundsätzlicher Nachteil eines Klebstoffs mit darin verteiltem Gettermaterial ist die Beeinträchtigung der Klebeeigenschaften durch das Gettermaterial. So kann dieses Fläche an der Kontaktfläche zum zu verklebenden Substrat einnehmen, die dann nicht mehr für die Verklebung zur Verfügung steht. Darüber hinaus kann das Gettermaterial beim Verkapseln elektronischer Anordnungen in direkten Kontakt mit der Anordnung gelangen und diese aufgrund seiner Reaktivität schädigen.

WO 2009/086095 A2 beschreibt ein Verkapselungssystem, umfassend einen flexiblen Barrierefilm, einen Klebstoff, der zumindest teilweise auf den Barrierefilm aufgebracht ist, und ein Trockenmittel, das zumindest auf einen Teil des Barrierefilms oder des Klebstoffs aufgebracht ist. Nachteilig ist die komplexe Herstellung einer solcherart strukturierten Schicht.

Ferner ist es möglich, besonders permeatarme Rohstoffe einzusetzen oder den Klebstoff bei der Herstellung oder vor der Applikation von permeierenden Substanzen zu befreien, zum Beispiel durch thermische Trocknung, Vakuumtrocknung, Gefriertrocknung oder das Einmischen von Gettern. WO 2015/106940 A1 beschreibt ein Verfahren zum Entfernen von Permeaten aus einem Flächengebilde I, welches zumindest zum Teil im Aufbau einer organischen elektronischen Anordnung verwendet wird, umfassend das unmittelbare oder mittelbare flächige Inkontaktbringen des Flächengebildes I mit einem mindestens ein Gettermaterial enthaltenden und zur Aufnahme mindestens eines Permeats aus dem Flächengebilde I befähigten Flächengebilde II, wobei keine klebende Verbindung zwischen den Flächengebilden I und II zustande kommt. Nachteilig an derartigen Verfahren sind die lange Trockendauer und die gegebenenfalls hohen oder niedrigen Trocknungstemperaturen, die den Klebstoff schädigen oder chemische Reaktionen, wie zum Beispiel eine Vernetzung, auslösen können. Auch ist der Prozess des Einmischens und späteren Abtrennens der Getter aufwändig.

Werden solche kleberseitigen Maßnahmen zur Verminderung des Eintrags von schädlichen permeierenden Substanzen in den zu schützenden Aufbau getroffen, so ist es notwendig, die hergestellten Eigenschaften bis zur Verwendung des Klebstoffs möglichst uneingeschränkt zu erhalten. So ist es zum Beispiel notwendig, einen besonders wasserfrei hergestellten Klebstoff vor der Wasseraufnahme aus der Umgebung zu schützen.

Diese Aufgabe wird in der Regel durch eine permeationsdichte oder zumindest -hemmende Verpackung der Klebstoffe gelöst. Flüssigklebstoffe werden in der Regel in entsprechende Behälter, zum Beispiel aus Metall, abgefüllt. Klebebänder werden oft in flexible Beutel aus permeationshemmendem Material - zum Beispiel aus Polyethylenfolie oder einem Folienlaminat aus Aluminium und Polyester - eingeschweißt. Auch die Verpackungsmaterialien selbst müssen dabei möglichst frei von Permeaten sein, die zur Füllgutseite hin freigesetzt werden könnten.

Um Schwächen in der Dichtheit der Verpackung entgegenzuwirken oder eingeschlossene Permeate schnell zu binden, wird oft auch ein Getter mit verpackt, zum Beispiel in Gestalt eines mit Silicagel oder Zeolith gefüllten Beutels. Dieser Getter ist in der Regel nicht in direktem Kontakt mit dem Füllgut. Nachteilig ist bei diesem Verfahren insbesondere der erhöhte Verpackungsaufwand.

Ein spezifisches Problem tritt bei der Verpackung von flächigen Klebstoffen, also Klebebändern oder Klebefolien, auf: Werden diese als Zuschnitte gestapelt oder zur Rolle aufgewickelt, wird dabei Gas - beispielsweise Luft - eingeschlossen, das sich nicht im Austausch mit dem weiteren in der Verpackung verbleibenden Gasraum befindet. Enthaltene unerwünschte Permeate, zum Beispiel Wasserdampf, gelangen also nicht zum in der Verpackung befindlichen Gettermaterial und können somit in die Klebemasse übertreten. Darüber hinaus enthalten solche Klebebänder in der Regel ein temporäres Abdeckmaterial, den sogenannten Liner, sowie oft auch ein Trägermaterial. Diese können ebenfalls unerwünschte Permeate enthalten, die insbesondere aufgrund der großen Kontaktfläche mit dem Klebstoff leicht in diesen permeieren können. In die Verpackung eingebrachte Getterbeutel oder -pads können diese Permeate nicht zuverlässig abfangen und binden. Eine vollständige Befreiung der Liner- und Trägermaterialien von den unerwünschten Permeaten, zum Beispiel durch Trocknung, ist langwierig und aufwändig.

Als Wege zur Lösung dieses Problems sind zum einen in WO 2014/095387 A1 Klebebänder beschrieben, die in einer ihrer zentralen Schichten ein Gettermaterial enthalten. Zum anderen sind in WO 2013/091911 A1 und EP 2 607 439 A1 Releaseliner beschrieben, die Gettermaterialien enthalten und daher sowohl Permeate aus dem Klebeband selbst als auch aus der Umgebung aufnehmen können. Gerade für die letztgenannte Lösung ergibt sich aber eine weitere Schwierigkeit: Häufig müssen die Klebebänder Spalten oder Lücken in den zu verklebenden Substraten überbrücken. Damit dies nicht zu Schwächen in der Verklebung führt, müssen die Klebmassen solche Spalten oder Lücken ausfüllen, d.h. sie müssen eine eher weiche Konsistenz aufweisen. Für derartige Klebmassen benötigt man stark trennende Releaseliner. Enthält ein Releaseliner nun Gettermaterialien, so führen diese in der Regel zu einer Dickenzunahme des Releaseliners. Dies geht aber zu Lasten der Entfernbarkeit von ein einer Klebmasse mit guten "gap-filling"-Eigenschaften. Grundsätzlich gilt nämlich, dass ein Liner sich umso leichter entfernen lässt, je dünner er ist. Der zusätzliche Linerbestandteil "Gettermaterial" aber führt zu einer Zunahme der Dicke und wirkt damit einer besseren Entfernbarkeit des Liners von der Klebmasse entgegen.

Die vorliegende Erfindung adressiert insbesondere dieses Problem. Es soll also ein Klebeband bereitgestellt werden, das einen elektronischen Aufbau wirksam vor Permeaten, insbesondere vor Wasser, schützt und das gleichzeitig gute "gap-filling"-Eigenschaften aufweist. Zur Lösung dieser Aufgabe wird ein spezieller Schichtenaufbau in einem mehrschichtigen Klebeband vorgeschlagen. Ein erster und allgemeiner Gegenstand der Erfindung ist ein Klebeband zur Verkapselung elektronischer Aufbauten, das in der nachstehenden Abfolge:
- eine Trägerschicht ohne Barrierewirkung zumindest gegenüber Wasser, die eine WVTR von mindestens 1 g/(m²*d) (gemessen nach ASTM F-1249 bei 38 °C, 90 % relative Feuchte, 50 µm Schichtdicke) aufweist, wobei das Material der Trägerschicht ausgewählt ist aus der Gruppe bestehend aus Polymerfolien, Papieren, Geweben, Vliesen, Folienverbunden und Kombinationen dieser Materialien;
- eine Schicht, enthaltend mindestens ein zur Sorption von mindestens Wasser befähigtes Gettermaterial, wobei das Gettermaterial ausgewählt ist aus der Gruppe bestehend aus Calciumchlorid, Calciumoxid, Bortrioxid, Natriumsulfat, Kaliumcarbonat, Kupfersulfat, Magnesiumperchlorat, Magnesiumsulfat, Zeolithen sowie Mischungen von zwei oder mehreren der vorstehenden Substanzen;
- eine Lage mit Barrierewirkung gegenüber Wasser, die eine WVTR von < 1 g/(m²*d) (gemessen nach ASTM F-1249 bei 38 °C, 90 % relative Feuchte, bezogen auf die Dicke der jeweiligen Lage) aufweist, wobei die Lage mit Barrierewirkung gegenüber Wasser ein Verbund aus einer Polyurethan-, Polypropylen-, Polyethylen-, Polyvinylchlorid-, Polyvinylidenchlorid-, Polyethylen-2,6-naphthalat, Polyacrylnitril-, Polyethylenterephthalat-, EthylenVinylalkohol-Copolymer-, Polyacrylat- oder Poly-ε-caprolactam-Folie und mindestens einer zwischen dieser Folie und der Haftklebmasseschicht angeordneten permeationshemmenden Schicht, eine metallische Folie oder eine Glasfolie ist; und
- eine Haftklebmasseschicht
umfasst, wobei auf der Trägerschicht eine nach außen weisende Releaseschicht aufliegt und/oder die Haftklebmasseschicht mit einem Releaseliner eingedeckt ist, der eine auf der Haftklebmasseschicht aufliegende Releaseschicht aufweist. Wie sich gezeigt hat, reicht, wenn das Klebeband als Rolle oder aufeinander aufgestapelt gelagert wird, der mittelbare Kontakt zwischen Releaseschicht oder Releaseliner und der getterhaltigen Schicht auf der Trägerrückseite aus, um die Haftklebmasseschicht auf einen Permeatanteil, insbesondere einen Wassergehalt, von weniger als 100 ppm einzustellen. Vorteilhaft kann dabei auf einen vergleichsweise dicken und somit schwerer von der Haftklebmasse entfernbaren Liner verzichtet werden.

Ein Klebeband wird erfindungsgemäß als ein Flächengebilde angesehen, also als ein im Wesentlichen in zwei Dimensionen ausgedehntes Gebilde. Bänder mit ausgedehnter Länge und begrenzter Breite, Bandabschnitte, Etiketten, Stanzlinge und dergleichen sind also von der Bezeichnung "Klebeband" mit umfasst. Die auf der Trägerschicht aufliegende Releaseschicht wird - wenn sie vorhanden ist - als Bestandteil des Klebebandes aufgefasst, weil sie zum Schichtverbund desselben gehört. Der auf der Haftklebmasseschicht aufliegende Releaseliner hingegen wird - wenn er vorhanden ist - nicht als Bestandteil des Klebebandes aufgefasst, da er nur zum temporären Schutz der Haftklebmasse und zum Entfernen von dieser vor der Applikation des Klebebandes vorgesehen ist. Der Liner unterscheidet sich somit deutlich hinsichtlich der Verbundfestigkeit, mit der er am Schichtaufbau teilnimmt, von den weiteren Schichten des Klebebandes.

Das erfindungsgemäße Klebeband umfasst eine Trägerschicht ohne Barrierewirkung zumindest gegenüber Wasser. Der Ausdruck "ohne Barrierewirkung zumindest gegenüber Wasser" bedeutet, dass die Schicht jedenfalls für Wasser und gegebenenfalls auch für weitere Permeate durchlässig ist. Typischerweise zeigen solche Trägerschichten WVTR-Werte von mehr als 1 g/(m²*d), erfindungsgemäß stärker bevorzugt von mehr als 10 g/(m²*d), jeweils gemessen bei 38 °C und 90 % relativer Feuchte und bezogen auf eine Schichtdicke von 50 µm. Werden Trägerschichten ohne Barrierewirkung zumindest gegenüber Wasser mit WVTR-Werten kleiner 100 g/(m²*d) verwendet, so beträgt die Dicke der betreffenden Trägerschicht bevorzugt weniger als 70 µm, stärker bevorzugt weniger als 30 µm. Diese Parameter erleichtern die Permeation von Wasser und ggf. weiteren Permeaten zu der Gettermaterial-haltigen Schicht und ermöglichen so die Aufnahme der Permeaten durch das Gettermaterial.

Das Material der Trägerschicht ohne Barrierewirkung zumindest gegenüber Wasser ist ausgewählt aus der Gruppe bestehend aus Polymerfolien, Papieren, Geweben, Vliesen, Folienverbunden und Kombinationen dieser Materialien. Besonders bevorzugt ist das Material der Trägerschicht ohne Barrierewirkung zumindest gegenüber Wasser eine ein- oder mehrschichtige Polymerfolie. Ein mehrschichtiger Folienaufbau kann dabei durch Coextrusion, Kaschierung mittels eines Klebers oder durch Extrusionsbeschichtung generiert werden. Die Polymerfolie umfasst bevorzugt Polymere ausgewählt aus der Gruppe bestehend aus:
Polyethylenen, insbesondere HDPE, MDPE, LDPE, LLDPE, und Co- und Blockcopolymeren des Ethylens; Polypropylenen, insbesondere dem durch mono-oder biaxiale Streckung erzeugten, orientierten Polypropylen (OPP), wobei als Polymer HOMO-PP, HECO-PP oder rPP verwendet werden; lonomeren auf Basis von Ethylen oder Propylen; MSA-gepropften Polymeren; zyklischen Olefin Copolymeren (COC); Polyvinylchlorid (PVC); Polyestern, insbesondere biaxial verstrecktem Polyethylenterephthalat (PET) und Poylethylennaphthalat (PEN); Ethylenvinylalkohol (EVOH); Polyethylenvinylacetat (EVA); Polyvinylidenchlorid (PVDC); Polyvinylidenfluorid (PVDF); Polyacrylnitril (PAN); Polycarbonat (PC); Polyamid (PA); Celluloseacetat; Polymethylmethacrylat (PMMA); Polyvinylalkohol; Polyurethan (PU); Polyethersulfon (PES)und Polyimid (PI). Die Polymere können als 100%-System, als Blend mit einem oder mehreren weiteren der vorgenannten Polymere und/oder in Kombination mit weiteren Additiven wie zum Beispiel Füllstoffen, Antioxidantien, Gleitmitteln, Antiblockmitteln, Farbstoffen und/oder Pigmenten verwendet werden.

Ganz besonders bevorzugt ist das Material der Trägerschicht ohne Barrierewirkung zumindest gegenüber Wasser eine ein- oder mehrschichtige Polymerfolie, die ein Polymer ausgewählt aus der Gruppe bestehend aus der Gruppe bestehend aus PET, PVC, PEN, PC und PU sowie Kombinationen der vorgenannten Polymere umfasst..

Das erfindungsgemäße Klebeband umfasst weiter eine Schicht, die mindestens ein zur Sorption von mindestens Wasser befähigtes Gettermaterial enthält. Unter einem "Gettermaterial" wird dabei ein Stoff verstanden, der zur Aufnahme (Sorption) einer oder mehrerer permeationsfähiger Substanz(en) in der Lage ist. Die Sorption der permeationsfähigen Substanz(en) durch das Gettermaterial kann dabei beispielsweise durch Absorption oder Adsorption erfolgen, wobei Adsorption sowohl in Form von Chemisorption als auch von Physisorption auftreten kann. Das Gettermaterial ließe sich daher auch als "Sorbens" oder als "Sorptionsmittel" bezeichnen.

Unter einer "permeationsfähigen Substanz" wird eine Substanz verstanden, die als gasförmiger oder flüssiger, gegebenenfalls auch als fester Stoff, in die Haftklebmasseschicht des erfindungsgemäßen Klebebandes eindringen und diese nachfolgend durchdringen kann. Derartige Substanzen werden auch als "Permeate" bezeichnet. Die Permeate können aus dem Klebeband bzw. der Haftklebmasse selbst oder aus der Umgebung stammen. Aus der Klebmasse selbst kommen häufig niedermolekulare organische Verbindungen wie Lösemittelreste, Restmonomere, Öle, Harzkomponenten, Weichmacher sowie insbesondere Wasser. Aus der Umgebung stammen oft Wasser, flüchtige organische Verbindungen (VOCs), niedermolekulare Kohlenwasserstoffe und Sauerstoff. Als "permeationsfähige Substanzen" beziehungsweise "Permeate" werden insbesondere die folgenden Substanzen angesehen:
Acetonitril, 1-Butanol, Chlorbenzol, Chloroform (Trichlormethan), Cyclohexan, Diethylether, 1,4-Dioxan, Eisessig (Essigsäure), Essigsäureanhydrid, Essigsäureethylester (Ethylacetat, Essigester), Essigsäure-n-Butylester (n-Butylacetat), Essigsäure-tert.-butylester (t-Butylacetat), Ethanol, Methanol, n-Hexan, n-Heptan, 3-Hexanon, 2-Propanol (Isopropanol), 3-Methyl-1-butanol (Isoamylalkohol), Methylenchlorid (Dichlormethan), Methylethylketon (Butanon), Methylisobutylketon, Nitromethan (Nitrocarbol), n-Pentan, 2-Pentanon, 3-Pentanon, Petrolether (Leichtbenzin), Benzin, Propanol, Pyridin (Azin), tert-Butylmethylether, Tetrachlorethen (Perchlorethen), Tetrahydrofuran, Toluol, Trichlorethan, Triethylamin, Xylol, Sauerstoff, Methan, Ethan, Propan, Propen, Butan, Buten, Kohlenstoffdioxid, Ozon, Schwefeldioxid und insbesondere Wasser.

Erfindungsgemäß können auch Mischungen aus zwei oder mehreren Gettermaterialien eingesetzt werden.

Die Gettermaterialien werden ihrer Funktion entsprechend bevorzugt als im Wesentlichen von Permeaten freie Materialien eingesetzt, zum Beispiel wasserfrei. Dies unterscheidet Gettermaterialien von ähnlichen Materialien, die als Füllstoff eingesetzt werden.

Erfindungsgemäß ist das Gettermaterial ausgewählt aus der Gruppe bestehend aus Calciumchlorid, Calciumoxid, Bortrioxid, Natriumsulfat, Kaliumcarbonat, Kupfersulfat, Magnesiumperchlorat, Magnesiumsulfat, Zeolithen sowie Mischungen von zwei oder mehreren der vorstehenden Substanzen. Diese Gettermaterialien bieten den Vorteil, dass sie sich leicht in die Schicht einarbeiten lassen, ein hohes Sorptionsvermögen zeigen und regenerierbare Gettermaterialien sind. Darunter werden Substanzen verstanden, die aufgenommene Permeate, insbesondere Wasser, unter bestimmten Bedingungen wieder abgeben können und dadurch in einen Zustand gelangen, der sie zu erneuter Permeataufnahme befähigt.

In einer Ausführungsform der Erfindung liegt das Gettermaterial in der Gettermaterial enthaltenden Schicht partikulär vor. Darunter wird verstanden, dass das Gettermaterial im Sinne von DIN 53206-1: 1972-08 in Form von Primärteilchen, Aggregaten und Agglomeraten vorliegt.

Die Partikelgröße der Getterpartikel wird dabei wesentlich durch die Anforderungen an die Dicke der die Partikel enthaltenden Schicht oder des gesamten erfindungsgemäßen Klebebandes bestimmt beziehungsweise begrenzt. Als eine obere Grenze für die Partikelgröße können etwa 2000 µm angesehen werden. Bevorzugt beträgt die maximale Partikelgröße des Gettermaterials 100 µm. Unter der "Partikelgröße" wird dabei die maximale Ausdehnung eines Partikels verstanden. Die Bestimmung der Partikelgröße erfolgt bevorzugt mittels Laserbeugung nach ISO 13320 (wobei im Dispersionsschritt Agglomerate dispergiert werden, nicht jedoch Aggregate), aber auch andere dem Fachmann bekannte Verfahren sind grundsätzlich geeignet.

In einer speziellen Ausführungsform liegt das Gettermaterial partikulär und nanoskalig vor. Dies bedeutet, dass die maximale Partikelgröße weniger als 500 nm, bevorzugt weniger als 200 nm, insbesondere weniger als 100 nm beträgt.

Bevorzugt liegt das Gettermaterial in der Gettermaterial enthaltenden Schicht partikulär vor und ist zum Teil von einem Matrixmaterial umschlossen. Unter einem "Matrixmaterial" wird ein Material verstanden, das vorliegendes Gettermaterial, insbesondere partikuläres Gettermaterial, zum Teil oder vollständig umhüllt und von dem Material der weiteren Schichten des Klebebandes verschieden ist. Besonders bevorzugt liegt das Gettermaterial als dispergierte Phase vor, d.h. es ist von einem Matrixmaterial umgeben, welches die kontinuierliche Phase der Dispersion bildet.

In einer Ausführung liegt das Gettermaterial als dispergierte Phase in einer Klebmasse vor. Dementsprechend ist das Matrixmaterial bevorzugt eine Klebmasse, besonders bevorzugt eine Haftklebmasse, insbesondere eine aus der Schmelze verarbeitete, thermisch vernetzte Polyacrylathaftklebmasse oder eine photopolymerisierte Polyacrylathaftklebmasse. Dadurch können die Eigenschaften der Gettermaterial enthaltenden Schicht auf deren Aufgabe im Verbund hin optimiert werden. Beispielsweise kann die Haftklebmasse für das Matrixmaterial eine besonders einfache Dispersion des Gettermaterials ermöglichen oder besonders gut für Permeate durchlässig sein, damit diese schnell zum Gettermaterial gelangen.

Besonders vorteilhaft ist eine Ausführung einer das dispergierte Gettermaterial enthaltenden Haftklebmasse als viskoelastischer Träger, z.B. auf der Basis von aus der Schmelze verarbeiteten, thermisch vernetzbaren Polyacrylaten, wie sie in WO 2008/122489 A1, DE 102008052625 A1 oder DE 102008059050 A1 beschrieben sind, oder auf der Basis photopolymerisierbarer Acrylate, wie sie in US 4,150,170, US 4,181,752, US 4,330,590, US 4,379,201, US 4,391,687 oder EP 0 573 570 B1 beschrieben sind. Mit einer derartigen Ausführung des erfindungsgemäßen Klebebandes kann eine sehr hohe Verklebungsleistung erreicht werden.

Liegt das Gettermaterial partikulär vor und ist zumindest zum Teil von einer Matrix umschlossen, so ist die das Gettermaterial enthaltende Schicht bevorzugt 5 µm bis 3000 µm dick. Da das erfindungsgemäße Klebeband im Produktaufbau verbleibt, sind niedrigere Schichtdicken bis 200 µm besonders bevorzugt. Wird nur eine geringe Aufnahmekapazität benötigt oder soll das Klebeband möglichst flexibel sein, wird eine Dicke von 5 bis 100 µm bevorzugt. Wird eine hohe Aufnahmekapazität benötigt, wird eine Dicke von 100 bis 200 µm bevorzugt. Für viele Anwendungen liegt ein sinnvoller Kompromiss aus Flexibilität (dünne Schicht) und Aufnahmekapazität (dicke Schicht) im Bereich von 20 bis 70 µm, insbesondere beträgt daher die Schichtdicke der Gettermaterial enthaltenden Schicht 20 bis 70 µm.

Das Gettermaterial kann auch in den Poren eines porösen Trägermaterials vorliegen. Dabei füllt das Gettermaterial die Poren nicht vollständig aus, sondern ist darin lediglich - zum Beispiel geometrisch - fixiert, so dass das gettergefüllte Trägermaterial sehr gasdurchlässig ist. Dies hat den Vorteil, dass einwandernde Permeate sehr schnell an das Gettermaterial gelangen können und gleichzeitig durch das Trägermaterial eine hohe innere Festigkeit des Schichtverbunds erreicht werden kann. Poröse Trägermaterialien sind auch besonders zur Aufnahme flüssiger Gettermaterialien geeignet.

Als poröses Trägermaterial können beispielsweise textile Flächengebilde, geschlossen- und offenzellige Schäume oder Papiere eingesetzt werden. Besonders bevorzugt ist der poröse Träger mit darin vorliegendem Gettermaterial aber eine extrudierte und verstreckte Folie, z.B. auf Polyolefinbasis, wie sie in EP 0 232 060 A2 beschrieben wird. Demnach wird ein solcher gasdurchlässiger, poröser Film im Wesentlichen in folgenden Schritten hergestellt:
a) Mischen eines Polymerharzes und eines anorganischen Gettermaterials,
b) Formen eines Films aus der Mischung und
c) Strecken des erhaltenen Films zur Ausbildung der Porosität.

Durch die Auswahl eines Polyolefins als Polymerharz ergibt sich aufgrund der Polaritätsunterschiede zum Gettermaterial nur eine schwache Verankerung zwischen den beiden Materialien. Während der Verstreckung wird diese Verbindung zumindest teilweise gelöst, so dass um die dispers verteilten Getterteilchen Poren entstehen, die sich durch eine besonders gute Zugänglichkeit des Gettermaterials für Permeate auszeichnen. Das Gettermaterial liegt also nach dem Verstrecken nicht mehr vollständig von Matrixmaterial umhüllt vor. Durch die Wahl einer Folie als Trägermaterial ergibt sich zudem vorteilhaft eine gute Stanz- und Applizierbarkeit des Aufbaus. Bevorzugt weist die verstreckte, mit anorganischem Gettermaterial gefüllte Folie eine Dicke von weniger als 10 µm, besonders bevorzugt von weniger als 5 µm auf. Dies erlaubt vorteilhaft die Ausbildung einer höheren Flexibilität des erfindungsgemäßen Klebebandes.

Unter textilem Flächengebilde werden flexible Fasergebilde, wie z.B. Gewebe, Gelege, Gewirke, Gestricke, Vliese (verfestigt und unverfestigt) und Gitternetze verstanden.

Die Gettermaterial enthaltende Schicht kann grundsätzlich 0,5 bis 98 Gew.-% Gettermaterial enthalten. Bevorzugt enthält die Schicht 3 bis 85 Gew.-%, stärker bevorzugt 10 bis 60 Gew.-% Gettermaterial, insbesondere 15 bis 50 Gew.-% Gettermaterial, jeweils bezogen auf das Gesamtgewicht der Schicht. Es hat sich gezeigt, dass in diesem Anteilsbereich zum einen gute Getterkapazitäten realisiert werden können und zum anderen die mechanischen Eigenschaften der Schicht ausreichend erhalten bleiben.

Besteht die Gettermaterial enthaltene Schicht neben dem Gettermaterial aus einem Haftklebstoff bzw. liegt das Gettermaterial in einer Haftklebmasse dispergiert vor, so sind Mengen zwischen 0,5 bis 40 Gew.-% Gettermaterial bevorzugt, da in diesem Mengenbereich eine ausreichende Verklebungsfestigkeit der Trägerschicht ohne Barrierewirkung und der Lage mit Barrierewirkung erzielt wird. Besonders stabile Verklebungsfestigkeiten kombiniert mit einer guten Getterwirkung werden insbesondere im Bereich von 9 bis 35 Gew.-% Gettermaterial erzielt. Besonders bevorzugt enthält die Gettermaterial enthaltende Schicht daher 9 bis 35 Gew.-% Gettermaterial, bezogen auf das Gesamtgewicht der Schicht.

Werden Reaktivklebstoffe oder Heißklebstoffe (Hotmelts) verwendet, so lassen sich auf Kosten der Komplexität in der Herstellung Schichten mit deutlich höherem Gettergehalt herstellen. Hier sind Mengen zwischen 0,5 bis 85% bevorzugt, wobei vor allen Dingen im Hinblick auf dünne Schichten mit hoher Getterwirkung Mengen zwischen 40 bis 85 Gew.-% Gettermaterial besonders bevorzugt sind.

Ebenfalls bevorzugt liegt das Gettermaterial in Form von Partikeln in einer Partikelgrößenverteilung vor, bei der zumindest 10 Vol.-% die mittlere Schichtdicke der Gettermaterial-haltigen Schicht überschreiten. Dies führt zu einer rauen Oberfläche und kann die Verankerung der verschiedenen Schichten im Schichtverbund des erfindungsgemäßen Klebebandes verbessern.

Bevorzugt weist das Gettermaterial in seiner Applikationsform - also beispielsweise als partikuläres Material - eine minimale Permeat-Aufnahmekapazität, insbesondere für Wasser, von 1 %, stärker bevorzugt von 2 %, besonders bevorzugt von 5 %, insbesondere von 10 % seines Eigengewichts auf. Ganz besonders bevorzugt weist das Gettermaterial eine Aufnahmekapazität (maximal aufnehmbares Permeatgewicht) von > 20 % seines Eigengewichts auf, da hiermit der Gehalt an Getter gering gehalten werden kann. Die Aufnahmekapazität wird dabei nach Lagerung des im Wesentlichen permeatfreien Gettermaterials in seiner Applikationsform über 100 h bei 23 °C und 50 % relativer Luftfeuchte für das Permeat Wasserdampf oder bei 23 °C in gesättigter Atmosphäre bei anderen gasförmigen Permeaten ermittelt. Der Permeatgehalt des Getters nach Lagerung kann gravimetrisch bestimmt werden. Unter dem Aspekt der Aufnahmekapazität ist das Gettermaterial bevorzugt ausgewählt aus der Gruppe bestehend aus Kupfersulfat, Calciumoxid, Calciumchlorid und Zeolithen sowie Gemischen dieser Materialien.

Das Einbringen des Gettermaterials oder der Gettermaterialien in die Gettermaterial enthaltende Schicht kann durch sämtliche dem Fachmann bekannte Verfahren erfolgen. Dabei kann das Gettermaterial in Lösung, in Dispersion, als Schmelze oder als Fluid vorliegen.

Die Gettermaterial enthaltende Schicht kann neben dem Gettermaterial und gegebenenfalls dem Trägermaterial weitere Materialien beziehungsweise Substanzen enthalten, z.B. lichtabsorbierende oder lichtstreuende Materialien, UV-Absorber oder -reflektoren, Farbindikatoren, die eine Sättigung des Gettermaterials anzeigen, Alterungsschutzmittel und/oder Tackifier, insbesondere Klebharze.

Die Gettermaterial enthaltende Schicht kann direkt mittels dem Fachmann bekannter Beschichtungsverfahren, z.B. unter Verwendung eines Streichbalkens, aus der Lösung, Emulsion oder Dispersion aufgebracht werden. Das verwendete Löse-, Emulsionsbeziehungsweise Dispergiermittel kann in diesem Fall anschließend in einem handelsüblichen Trockenkanal verdampft werden. Ebenso ist eine lösungsmittelfreie Beschichtung, zum Beispiel mittels Streu, Beflockungs- oder Bepuderungsverfahren geeignet.

Die Gettermaterial enthaltende Schicht kann erfindungsgemäß auch gedruckt werden. Hierzu eignen sich nach dem Stand der Technik Tief- und Siebdruckverfahren. Bevorzugt werden hier rotative Druckverfahren angewendet. Ferner können Gettermaterial-haltige Schichten auch durch Aufsprühen aufgebracht werden, gegebenenfalls auch mit elektrostatischer Unterstützung.

Das erfindungsgemäße Klebeband umfasst weiter eine Lage mit Barrierewirkung gegenüber Wasser (nachfolgend auch "Barrierelage"). Eine derartige Barrierelage kann aus organischen oder anorganischen Materialien bestehen. Der Begriff "Lage" bedeutet, dass es sich um ein ein- oder auch mehrschichtiges Gebilde handeln kann.

Erfindungsgemäß ist die Lage mit Barrierewirkung gegenüber Wasser ein Verbund aus einer Polyurethan-, Polypropylen-, Polyethylen-, Polyvinylchlorid-, Polyvinylidenchlorid-, Polyethylen-2,6-naphthalat-, Polyacrylnitril-, Polyethylenterephthalat-, Ethylen-Vinylalkohol-Copolymer-, Polyacrylat- oder Poly-ε-caprolactam-Folie und mindestens einer zwischen dieser Folie und der Haftklebmasseschicht angeordneten permeationshemmenden Schicht, eine metallische Folie oder eine Glasfolie. Wird ein Verbund verwendet, so ist die permeationshemmende Schicht zur Haftklebmasse gerichtet und die Folie zeigt zur Gettermaterial enthaltenden Schicht.

Erfindungsgemäß weist die Barrierelage eine Permeationsbarriere gegen Wasserdampf (WVTR) von < 1 g/(m²*d) auf, wobei der Wert auf die jeweils verwendete Dicke der Barrierelage bezogen ist, also nicht auf eine spezifische Dicke normiert ist. Die WVTR wird dabei bei 38°C und 90% relativer Luftfeuchtigkeit nach ASTM F-1249 gemessen.

Das erfindungsgemäße Klebeband umfasst darüber hinaus eine Haftklebmasseschicht. Unter einer "Haftklebmasse" wird erfindungsgemäß, wie allgemein üblich, ein Stoff verstanden, der - insbesondere bei Raumtemperatur - dauerhaft klebrig sowie klebfähig ist. Charakteristisch für einen Haftklebstoff ist, dass er durch Druck auf ein Substrat aufgebracht werden kann und dort haften bleibt, wobei der aufzuwendende Druck und die Einwirkdauer dieses Drucks nicht näher definiert werden. In manchen Fällen, abhängig von der genauen Art des Haftklebstoffs, der Temperatur und der Luftfeuchtigkeit sowie dem Substrat, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines hohen Drucks notwendig sein.

Haftklebstoffe haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des Haftklebstoffes als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Anfließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA) ermittelbaren Größen Speichermodul (G`) und Verlustmodul (G") herangezogen werden. G` ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel δ bezeichnet.

Der Speichermodul G` ist wie folgt definiert: G' = (τ/γ) •cos(δ) (τ = Schubspannung, γ = Deformation, δ = Phasenwinkel = Phasenverschiebung zwischen Schubspannungs- und Deformationsvektor). Die Definition des Verlustmoduls G" lautet: G" = (τ/γ) •sin(δ) (τ = Schubspannung, γ = Deformation, δ = Phasenwinkel = Phasenverschiebung zwischen Schubspannungs- und Deformationsvektor).

Ein Stoff gilt im Allgemeinen als haftklebrig und wird im Sinne der Erfindung als haftklebrig definiert, wenn bei Raumtemperatur, hier definitionsgemäß bei 23°C, im Deformationsfrequenzbereich von 10⁰ bis 10¹ rad/sec G` zumindest zum Teil im Bereich von 10³ bis 10⁷ Pa liegt und wenn G" ebenfalls zumindest zum Teil in diesem Bereich liegt. "Zum Teil" heißt, dass zumindest ein Abschnitt der G'-Kurve innerhalb des Fensters liegt, das durch den Deformationsfrequenzbereich von einschließlich 10° bis einschließlich 10¹ rad/sec (Abszisse) sowie den Bereich der G'-Werte von einschließlich 10³ bis einschließlich 10⁷ Pa (Ordinate) aufgespannt wird. Für G" gilt dies entsprechend.

Grundsätzlich können alle dem Fachmann bekannten Haftklebemassen in der Haftklebmasseschicht eingesetzt werden, also beispielsweise solche auf der Basis von Acrylaten und/oder Methacrylaten, Polyurethanen, Naturkautschuken, Synthesekautschuken; Styrolblockcopolymermassen mit einem Elastomerblock aus ungesättigten oder hydrierten Polydienblöcken wie zum Beispiel Polybutadien, Polyisopren, Copolymeren aus beiden, Polybutylen, insbesondere Polyisobutylen, sowie weiteren, dem Fachmann geläufigen Elastomerblöcken; Polyolefinen, insbesondere Poly-α-olefinen und/oder Polyisobutylenen; Fluorpolymeren und/oder Silikonen. Unter den Begriff "Haftklebemasse" fallen auch weitere Massen, die haftklebende Eigenschaften im vorstehenden Sinne aufweisen. Die Haftklebmasse der Haftklebmasseschicht kann auch auf Kombinationen und Mischungen mehrerer Basispolymere sowie auf einer mit Klebharzen, Füllstoffen, Alterungsschutzmitteln, Vernetzern und/oder weiteren Zusätzen additivierten Haftklebmasse basieren.

Bevorzugt ist die Polymerbasis der Haftklebemasse ausgewählt aus der Gruppe bestehend aus Styrolblockcopolymeren, Polyolefinen und Epoxidharzen sowie Gemischen aus zwei oder mehreren dieser Polymere. Die aufgeführten Polymere zeichnen sich durch eine hohe Permeationsbarriere gegen Wasserdampf sowie einen geringen Gehalt an Wasser aus. Insbesondere ist die Polymerbasis der Haftklebemassen ausgewählt aus Styrolblockcopolymeren und Polyisobutylenen sowie Mischungen dieser Polymere. Unter den Polyolefinen ist Polybutylen besonders bevorzugt, insbesondere Polyisobutylen. Die aufgeführten Polymere zeichnen sich durch eine hohe Permeationsbarriere gegen Wasserdampf sowie einen geringen Gehalt an Wasser aus.

Bevorzugt weist die Haftklebmasseschicht zum Zeitpunkt der Fertigstellung des erfindungsgemäßen Klebebandes beziehungsweise vor dessen Verwendung, bevor also die bezweckte Aufnahme von Permeat aus dem Material des Klebebandes selbst und aus der Umgebung beginnt, einen Permeatgehalt, insbesondere einen Wassergehalt, von weniger als 2000 ppm, besonders bevorzugt von weniger als 800 ppm auf. Die Angabe ppm bezieht sich dabei auf die Relation des enthaltenen Gesamtgewichts an Permeaten zum untersuchten Klebmassegewicht. Der Permeatgehalt kann mittels Gaschromatographie nach VDA 277 bestimmt werden oder im Fall von Wasser nach DIN EN ISO 62 (gravimetrisches Verfahren, Methode 4) oder DIN 53715 (Karl-Fischer-Titration) nach Lagerung des Prüflings über 24 Stunden bei 23°C und 50 % relativer Luftfeuchte. Bei derart geringen Permeatgehalten der Haftklebmasse wird die Kapazität der Gettermaterialien der Getterschicht nicht so stark durch von vornherein in der Haftklebemasse enthaltene Permeate beansprucht; vielmehr kann die das Gettermaterial enthaltende Schicht ihre Funktion als Fänger von aus der Umgebung stammenden Permeaten besser erfüllen.

Die Haftklebmasseschicht weist bevorzugt eine geringe Permeationsrate für das zu immobilisierende Permeat auf. Im Fall von Wasserdampf als Permeat beträgt die Wasserdampfpermeationsrate (WVTR) bevorzugt jeweils weniger als 50 g/(m²*d), besonders bevorzugt weniger als 25 g/(m²*d), bezogen auf eine Klebmassedicke von 50 µm. Die WVTR wird dabei bei 38°C und 90% relativer Luftfeuchtigkeit nach ASTM F-1249, die Sauerstoffpermeationsrate (OTR) bei 23°C und 50% relativer Luftfeuchtigkeit nach DIN 53380-Teil 3 gemessen.

Durch die geringe Permeationsrate der Haftklebmasse diffundiert während der Lagerung des Klebebandes im aufgerollten Zustand oder im Stapel aus mehreren Klebebändern weniger Permeat aus der Umgebung durch die Haftklebmasse hindurch in die Gettermaterial-haltige Schicht, die somit ihre Funktion länger erfüllen oder mit einer geringeren Menge an Gettermaterial ausgerüstet werden kann, was den Materialeinsatz verringert und Kosten spart. Dies trifft insbesondere auf die Zeit der Herstellung eines erfindungsgemäßen Klebebandes zu, in der es noch nicht durch eine Verpackung oder Abdeckung (z.B. Liner) vor aus der Umgebung eindiffundierenden Permeaten geschützt ist.

Zur Optimierung der Eigenschaften kann die Haftklebmasse der Haftklebmasseschicht mit einem oder mehreren Additiven wie Klebrigmachern (Harzen), Weichmachern, Füllstoffen, Pigmenten, UV-Absorbern, Lichtschutzmitteln, Alterungsschutzmitteln, Vernetzungsmitteln, Vernetzungspromotoren oder Elastomeren abgemischt sein.

Die Menge beziehungsweise das Flächengewicht der Haftklebmasseschicht beträgt bevorzugt 1 bis 2000 g/m², stärker bevorzugt 10 bis 100 g/m², wobei unter "Menge" beziehungsweise "Flächengewicht" die Menge beziehungsweise das Flächengewicht nach einer eventuell durchgeführten Entfernung von Wasser und/oder Lösungsmittel verstanden wird.

Erfindungsgemäß liegt auf der Trägerschicht eine nach außen weisende Releaseschicht auf und/oder die Haftklebmasseschicht ist mit einem Releaseliner eingedeckt, der eine auf der Haftklebmasseschicht aufliegende Releaseschicht aufweist.

In einer Ausführungsform ist die Haftklebmasseschicht mit einem Releaseliner eingedeckt, der eine auf der Haftklebmasseschicht aufliegende Releaseschicht aufweist, wobei diese Releaseschicht eine Silikon-, fluorierte Silikon-, Silikon-Copolymer-, Fluorpolymer-, Polycarbamat- oder Polyolefin- Releaseschicht ist. Ein solcher Releaseliner bewirkt einen verbesserten Schutz der Haftklebmasse vor äußeren Einflüssen, beispielsweise vor Staub; zudem verbessert ein Releaseliner die Stanzbarkeit des erfindungsgemäßen Klebebandes.

In einer weiteren Ausführungsform liegt auf der Trägerschicht eine nach außen weisende Releaseschicht auf, und diese Releaseschicht ist eine Silikon-Releasebeschichtung. Eine solche zum Klebebandaufbau gehörende Releasebeschichtung reduziert im Vergleich zu einem zusätzlichen Releaseliner den Abfallanfall und erspart im Herstellungsprozess einen Arbeitsschritt, nämlich das Auflaminieren des Releaseliners, sowie beim Kunden einen Arbeitsschritt, nämlich das Entfernen des Releaseliners. Selbstverständlich muss bei einem solchen Aufbau die Klebkraft zwischen der Releaseschicht und der Haftklebmasseschicht des Klebebandes kleiner sein als die Klebkraft zwischen der Haftklebmasseschicht und der Schicht mit Barrierewirkung gegenüber Wasser, weil es ansonsten bei der Lagerung als Rolle oder im Stapel zur Delamination des Klebebandes und nicht zum gewünschten Entrollen bzw. Vereinzeln des Klebebandes bzw. der Klebebandzuschnitte kommt.

Die Releaseschicht kann grundsätzlich lösungsmittelhaltige und/oder lösungsmittelfreie Systeme umfassen, bevorzugt werden lösungsmittelfreie Systeme. "Lösungsmittelhaltige Trennbeschichtung" bzw. "Iösungsmittelhaltiges Silikon-Trennsystem" bedeutet, dass das betreffende Trennsystem als tatsächlich lösungsmittelhaltiges System aufgetragen wird, nach der in der Regel thermisch initiierten Vernetzung jedoch nur noch maximal Spuren des Lösemittels im Trennsystem vorliegen. Der Fachmann spricht dennoch von einem "lösungsmittelhaltigen System" und kennzeichnet damit die speziellen Eigenschaften einer solchen Lösungsmittel-basiert erhaltenen Trennbeschichtung.

Das Trennmittel kann strahlungsvernetzend (UV- oder Elektronenstrahl-), kondensations- oder additionsvernetzend sein, bevorzugt ist es additionsvernetzend.

Als Trennmittel werden bevorzugt Systeme eingesetzt, die auf vernetzbaren Silikonen basieren. Dazu zählen Mischungen aus Vernetzungskatalysatoren und so genannten thermisch härtbaren kondensations- oder additionsvernetzenden Polysiloxanen. Für kondensationsvernetzende Silikonsysteme sind als Vernetzungskatalysatoren häufig Zinnverbindungen wie Dibutylzinndiacetat in der Masse zugegen.

Silikonbasierende Trennmittel auf additionsvernetzender Basis lassen sich durch Hydrosilylierung härten. Diese Trennmittel umfassen üblicherweise die folgenden Bestandteile:
- ein alkenyliertes Polydiorganosiloxan (insbesondere lineare Polymere mit endständigen Alkenylgruppen),
- ein Polyorganowasserstoffsiloxan-Vernetzungsmittel sowie
- einen Hydrosilylierungskatalysator.

Als Katalysatoren für additionsvernetzende Silikonsysteme (Hydrosilylierungs-katalysatoren) haben sich beispielsweise Platin oder Platinverbindungen, wie zum Beispiel der Karstedt-Katalysator (eine Pt(0)-Komplexverbindung) durchgesetzt.

Weiterhin können auch photoaktive Katalysatoren, so genannte Photoinitiatoren, in Kombination mit UV-härtbaren kationisch vernetzenden Siloxanen auf Epoxid- und/oder Vinyletherbasis beziehungsweise UV-härtbaren radikalisch vernetzenden Siloxanen wie etwa acrylatmodifizierte Siloxane verwendet werden. Ebenso ist die Verwendung von elektronenstrahlhärtbaren Silikonacrylaten möglich. Entsprechende Systeme können je nach Verwendungszweck auch weitere Zusätze wie Stabilisatoren oder Verlaufshilfsmittel enthalten.

Auch photopolymerisierbare Organopolysiloxanmassen können verwendet werden. Genannt seien beispielsweise Massen, die durch die Reaktion zwischen Organopolysiloxanen, die mit (Meth)acrylatgruppen substituierte, direkt an die Siliciumatome gebundene Kohlenwasserstoffreste aufweisen und in Gegenwart eines Photosensibilisators vernetzt werden (siehe EP 0 168 713 B1 oder DE 38 20 294 C1). Ebenfalls verwendbar sind Massen, bei denen die Vernetzungsreaktion zwischen Organopolysiloxanen, die mit Mercaptogruppen substituierten Kohlenwasserstoff direkt an den Siliciumatomen gebunden aufweisen, und Organopolysiloxanen mit direkt an die Siliciumatome gebundenen Vinylgruppen in Gegenwart eines Photosensibilisator hervorgerufen wird. Solche Massen werden beispielsweise in der US 4,725,630 A1 beschrieben.

Beim Einsatz der zum Beispiel in der DE 33 16 166 C1 beschriebenen Organopolysiloxanmassen, die mit Epoxygruppen substituierte, direkt an die Siliziumatome gebundene Kohlenwasserstoffreste aufweisen, wird die Vernetzungsreaktion durch Freisetzung einer katalytischen Säuremenge induziert, die durch Photozersetzung zugesetzter Oniumsalzkatalysatoren erhalten wird. Andere durch einen kationischen Mechanismus härtbare Organopolysiloxanmassen sind Materialien, welche zum Beispiel Propenyloxysiloxanendgruppen aufweisen.

Des Weiteren können fluorierte Silikone und/oder Silikon-Copolymere Verwendung finden.

Besonders bevorzugt umfasst die Releaseschicht ein durch Vernetzung eines additionsvernetzenden Silikonsystems, bestehend aus einem vinylfunktionalisierten Polysiloxan als Basispolymer, einem Methylhydrogensiloxan als Vernetzer und einem Platinkatalysator, erhaltenes Releasesystem zu einem Anteil von 92,5 bis 99,5 Gew.-%, bezogen auf das Gesamtgewicht der Releaseschicht.

Ein weiterer Gegenstand der Erfindung ist die Verwendung eines erfindungsgemäßen Klebebandes zur Verkapselung eines elektronischen Aufbaus.

### Beispiele

### Prüfmethoden

Sofern nichts anderes angegeben ist, werden alle Messungen bei 23 °C und 50 % relativer Luftfeuchte durchgeführt.

### Klebkraft

Die Klebkräfte auf Stahl wurden analog ISO 29862 (Methode 3) bei 23 °C und 50 % relativer Luftfeuchte bei einer Abzugsgeschwindigkeit von 300 mm/min und einem Abzugswinkel von 180° bestimmt. Als Verstärkungsfolie wurde eine geätzte PET-Folie mit einer Dicke von 50 µm verwendet, wie sie z.B. von der Firma Coveme (Italien) erhältlich ist. Die Verklebung des Messtreifens wurde dabei mittels einer Anrollmaschine bei einer Temperatur von 23 °C vorgenommen. Die Klebebänder wurden sofort nach der Applikation abgezogen. Der Messwert (in N/cm) ergab sich als Mittelwert aus drei Einzelmessungen. Die Prüfung erfolgte an unvernetzten Mustern.

### Liner Release

Die Liner Release Kräfte wurden bei 23 °C und 50 % relativer Luftfeuchte bei einer Abzugsgeschwindigkeit von 300 mm/min und einem Abzugswinkel von 180° bestimmt. Die Verklebung des Messstreifens auf einer Stahlplatte wurde dabei mittels einer Anrollmaschine bei einer Temperatur von 23 °C vorgenommen. Die Klebebänder wurden sofort nach der Applikation abgezogen. Der Messwert (in cN/cm) ergab sich als Mittelwert aus drei Einzelmessungen. Die Prüfung erfolgte an unvernetzten Mustern.

### Permeabilität für Wasserdampf (WVTR)

Die Bestimmung der Permeabilität für Wasserdampf (WVTR) erfolgte nach ASTM F-1249. Die Haftklebmasse wurde dazu mit einer Schichtdicke von 50 µm auf eine permeable Membran aufgebracht. Die Wasserdampfdurchlässigkeit wurde bei 38°C und einer relativen Feuchte von 90 % bestimmt. Die Prüfung erfolgte an vernetzten Mustern.

### Klebharzerweichungstemperatur

Die Klebharzerweichungstemperatur wird nach der einschlägigen Methodik durchgeführt, die als Ring & Ball bekannt ist und nach ASTM E28 standardisiert ist.

Zur Bestimmung der Klebharzerweichungstemperatur der Harze kam ein Ring-Kugel-Automat HRB 754 der Firma Herzog zum Einsatz. Die Harzmuster wurden zunächst fein gemörsert. Das resultierende Pulver wurde in einen Messingzylinder mit Bodenöffnung (Innendurchmesser am oberen Teil des Zylinders 20 mm, Durchmesser der Bodenöffnung des Zylinders 16 mm, Höhe des Zylinders 6 mm) gefüllt und auf einem Heiztisch geschmolzen. Die Befüllmenge wurde so gewählt, dass das Harz nach dem Schmelzen den Zylinder ohne Überstand voll ausfüllte.

Der resultierende Probekörper wurde samt Zylinder in die Probehalterung des HRB 754 eingelegt. Zur Befüllung des Temperierbads wurde Glycerin verwendet, sofern die Klebharzerweichungstemperatur zwischen 50 °C und 150 °C lag. Bei niedrigeren Klebharzerweichungstemperaturen konnte auch mit einem Wasserbad gearbeitet werden. Die Prüfkugeln hatten einen Durchmesser von 9,5 mm und wogen 3,5 g. Entsprechend der HRB 754 Prozedur wurde die Kugel oberhalb des Probekörpers im Temperierbad angeordnet und auf dem Probekörper abgelegt. 25 mm unter dem Zylinderboden befand sich eine Auffangplatte, 2 mm über dieser eine Lichtschranke. Während des Messvorgangs wurde die Temperatur mit 5 °C/min erhöht. Im Temperaturbereich der Klebharzerweichungstemperatur begann sich die Kugel durch die Bodenöffnung des Zylinders zu bewegen, bis sie schließlich auf der Auffangplatte zum Stehen kam. In dieser Position wurde sie von der Lichtschranke detektiert und zu diesem Zeitpunkt die Temperatur des Temperierbads registriert. Es fand eine Doppelbestimmung statt. Die Klebharzerweichungstemperatur ist der Mittelwert aus den beiden Einzelmessungen.

### MMAP

MMAP ist der gemischte-Methylcyclohexan-Anilin-Trübungspunkt, der unter Verwendung eines modifizierten ASTM C 611-Verfahrens bestimmt wurde. Methylcyclohexan wurde für das in dem Standard-Prüfverfahren verwendete Heptan eingesetzt. Das Verfahren verwendet Harz/Anilin/Methylcyclohexan in einem Verhältnis von 1/2/1 (5 g/10 ml/5 ml); der Trübungspunkt wird durch Abkühlen einer erhitzten, klaren Mischung der drei Komponenten, bis die vollständige Trübung gerade eintritt, bestimmt.

### DACP

Der DACP ist der Diaceton-Trübungspunkt und wird durch Abkühlen einer erhitzten Lösung von 5 g Harz, 5 g Xylol und 5 g Diacetonalkohol bis zu dem Punkt bestimmt, bei welchem die Lösung trübe wird.

### Messung des Wassergehalts

Der Wassergehalt wurde ermittelt nach DIN 53715 (Karl-Fischer-Titration). Die Messung erfolgte an einem Karl-Fischer Coulometer 851 in Verbindung mit einem Ovensampler (Ofentemperatur 140 °C). Mit einer Einwaage von ca. 0,3 g wurde jeweils eine Dreifachbestimmung durchgeführt. Als Wassergehalt wird der arithmetische Mittelwert der Messungen angegeben. Die Einwaage erfolgte bei der Bestimmung der Ausgangswerte von Rohmaterialien (höhere Messwerte) in einem klimatisierten Raum bei 23°C und 50% r.F.. Die Einwaage der getrockneten Klebebänder in die Messvials erfolgte in einer Stickstoff-Schutzgasatmosphäre ("Glove-Box"), in der konstant weniger als 3 ppm Feuchtigkeit enthalten war. Um den Einfluss der trockenen Umgebung möglichst gering zu halten, wurde nach dem Öffnen der Aluminiumbeutel mit den getrockneten Klebebändern innerhalb von 2 Minuten das Messvial mit der Probemenge befüllt und verschlossen. Damit sowohl die getrocknete Haftklebmasse als auch der restliche Lagenaufbau bewertet werden konnten, wurde die Haftklebmasse von der Schicht mit Barrierewirkung abgezogen.

### Beispiele:

Die Herstellung der erfindungsgemäßen Klebebänder erfolgte im Labor in 3 Schritten.

### Produktaufbau A (ohne zusätzlichen Release-Liner)

### 1) Herstellung eines Laminats aus Lage mit Barrierewirkung -Gettermaterial enthaltender Schicht- Trägerschicht

Exemplarisch für die Gruppe der Lagen mit Barrierewirkung wurde ein Laminat aus einer Aluminiumfolie (d = 20µm) mit einer PET-Folie (23µm) der Firma Novelis gewählt. Auf die PET-Seite wurden 40 µm der Gettermaterial enthaltenden Schicht aus Lösung mit einem Rakel aufgebracht (Zusammensetzung vgl. Tabelle 1). Das Lösungsmittel wurde für 10 Minuten bei Raumtemperatur gefolgt von 10 Minuten bei 110°C entfernt. Die Gettermaterial enthaltende Schicht wurde mit der Trägerschicht (einseitig silikonisierte 50 µm PET-Folie der Firma SKC) so laminiert, dass sie mit der nicht silikonisierten Seite in Kontakt kam.

### 2) Aufbringen der Haftklebmassenschicht

Auf die nicht silikonisierte Seite (Seite mit Barrierewirkung) des Laminats aus Arbeitsschritt 1) wurde aus Lösung eine Haftklebmasse mit einem Rakel aufgebracht (Zusammensetzung vgl. Tabelle 2). Das Lösungsmittel wurde für 10 Minuten bei Raumtemperatur gefolgt von 10 Minuten bei 110°C entfernt. Die Schichtdicke der Haftklebmasse betrug 50 µm.

### 3) Lagerung zur Bestimmung der Trocknungseffizienz

Zur Simulation einer Klebebandrolle wurden zwei nach den Schritten 1-2 hergestellten DIN-A4-Muster zusammenlaminiert, sodass die Haftklebmasse des einen Aufbaus in Kontakt mit der silikonisierten Seite des anderen Aufbaus kam. Dieser Zweischicht Aufbau wurde in einem Aluminiumbeutel verschweißt und für 7 Tage gelagert.

Nach 7 Tagen wurde die Restfeuchte des Produktaufbaus bestimmt, der sich auf der silikonisierten Seite des anderen Produktaufbaus befand. In allen Fällen war die Restfeuchte unter 20 ppm.

### Produktaufbau B (mit zusätzlichem Release-Liner)

### 1) Herstellung eines Laminats aus Lage mit Barrierewirkung -Gettermaterial enthaltender Schicht- Trägerschicht

Exemplarisch für die Gruppe der Lagen mit Barrierewirkung wurde ein Laminat aus einer Aluminiumfolie (d = 20µm) mit einer PET-Folie (23µm) der Firma Novelis gewählt. Auf die PET-Seite wurden 40 µm der Gettermaterial enthaltenden Schicht aus Lösung mit einem Rakel aufgebracht (Zusammensetzung vgl. Tabelle 1). Das Lösungsmittel wurde für 10 Minuten bei Raumtemperatur gefolgt von 10 Minuten bei 110°C entfernt. Die Gettermaterial enthaltende Schicht wurde mit der Trägerschicht (50 µm PET-Folie der Firma Laufenberg) laminiert.

### 2) Aufbringen der Haftklebmassenschicht

Auf die Alu-Seite des Laminats aus Arbeitsschritt 1) wurde aus Lösung eine Haftklebmasse mit einem Rakel aufgebracht (Zusammensetzung vgl. Tabelle 2). Das Lösungsmittel wurde für 10 Minuten bei Raumtemperatur gefolgt von 10 Minuten bei 110°C entfernt. Die Schichtdicke der Haftklebmasse betrug 50 µm. Die offene Klebmasseschicht wurde mit einem 50µm silikonisierten PET-Release-Liner der Firma SKC mit der silikonisierten Seite zur Klebemasse laminiert.

### 3) Lagerung zur Bestimmung der Trocknungseffizienz

Zur Simulation einer Klebebandrolle wurden zwei nach den Schritten 1-2 hergestellten DIN-A4-Muster übereinandergelegt, sodass der Release-Liner des einen Aufbaus in Kontakt mit der Trägerschicht des anderen Aufbaus kam. Dieser Zweischicht Aufbau wurde in einem Aluminiumbeutel verschweißt, mit einer DINA4 Platte und einem 2 kg-Gewicht zusammengedrückt, um die Wickelspannung zu simulieren, und für 7 Tage gelagert.

Nach 7 Tagen wurde die Restfeuchte des Produktaufbaus bestimmt, der den zweiten Aufbau auf der Trägerseite kontaktiert hatte.

**Tabelle 1: Zusammensetzung Gettermaterial enthaltende Schicht**

| | | |
|---|---|---|
| 100 Teile | Tuftec P 1500 | SBBS mit 30 Gew.-% Blockpolystyrolgehalt der Firma Asahi. Das SBBS enthält ca. 68 Gew.-% Zweiblockgehalt. |
| 100 Teile | Escorez 5600 | Hydriertes KW-Harz mit einem Erweichungspunkt von 100 °C der Firma Exxon |
| 25 Teile | Ondina 917 | Weißöl aus paraffinischen und naphthenischen Anteilen der Firma Shell |
| 40 Teile | Calciumoxid | Absorbierendes Gettermaterial der Firma Sigma-Aldrich. CAS: 1305-78-8 |

| | | |
|---|---|---|
| Als Lösungsmittel wurde ein Gemisch aus Toluol und Aceton im Verhältnis 2:1 verwendet. Der Feststoffgehalt betrug 45% vor der Zugabe des Getters. Calciumoxid wurde erst kurz vor der Beschichtung unter starkem Rühren in die Klebmasse eingearbeitet. | | |

**Tabelle 2: Haftklebmasse**

| | | |
|---|---|---|
| 40 Teile | Kraton G 1657 | SEBS mit 13 Gew.-% Blockpolystyrolgehalt der Firma Kraton. Das SEBS enthielt 36 Gew.-% Zweiblockgehalt. |
| 40 Teile | Regalite 1100 | vollhydriertes Kohlenwasserstoffharz der Firma Eastman (Ring and Ball 100 °C, DACP = 45, MMAP = 82), |
| 20 Teile | Uvacure 1500 | cycloaliphatisches Diepoxid der Firma Dow |
| 1 Teile | Triarylsulfoniumhexafluoroantimonat | kationischer Fotoinitiator der Firma Sigma-Aldrich. Der Photoinitiator weist ein Absorptionsmaximum im Bereich 320 nm bis 360 nm auf und lag als 50 Gew.-%-ige Lösung in Propylencarbonat vor. |

| | | |
|---|---|---|
| Als Lösungsmittel wurde ein Gemisch aus Toluol und Benzin im Verhältnis 3:7 verwendet. Der Feststoffgehalt betrug 50%. | | |

**Tabelle 3: Ergebnisse**

| | Gettermaterial enthaltende Schicht | Haftklebmasse | Trägerschicht |
|---|---|---|---|
| Klebkraft / N cm⁻¹ | 3,2 | 2,6 | - |
| WVTR / g m⁻² d⁻¹ | - | 31 | 14 |
| Initiale Feuchtigkeit / ppm | - | 843 | 2348 |
| Feuchtigkeit nach 7-Tage-Lagerung in Verbund / ppm (Aufbau A) | - | < 20 ppm | < 20 ppm |
| Feuchtigkeit nach 7-Tage-Lagerung in Verbund / ppm (Aufbau B) | | < 20 ppm | < 20 ppm |

### Vergleichsbeispiel mit getterhaltiger Schicht in dem entfernbaren Liner:

Hier wurde die Schichtreihenfolge geändert, indem vergleichbar zu Aufbau B ein Liner verwendet wurde, der aber die getterhaltige Schicht enthält. Dazu wurde auf die Trägerschicht (50 µm PET-Folie der Firma Laufenberg) die in Tabelle 1 beschriebene, Gettermaterial enthaltende Schicht mittels Rakel aus Lösung aufgebracht, getrocknet und mit der nichtsilikonisierten Seite des in Aufbau B verwendeten Liners laminiert (50 µm silikonisierter PET-Release-Liner der Firma SKC). Auf die nun nach außen weisende silikonisierte Seite wurde in einem zweiten Schritt die Haftklebmasse aus Tabelle 2 zu 50 µm Schichtdicke aufgebracht und nach Trocknung mit einer Lage mit Barrierewirkung laminiert. Es wurde ein Laminat aus einer Aluminiumfolie (d = 20 µm) mit einer PET-Folie (23 µm) der Firma Novelis gewählt. Die Laminierung erfolgte mit der Aluminiumseite zur Haftklebmasse.

**Tabelle 4: Ergebnisse Release**

| | Aufbau A | Aufbau B | Vergleichsbeispiel |
|---|---|---|---|
| Schichtdicke Liner / µm | - | 50 µm | 150 µm |
| Liner Release / cN cm⁻¹ | kein Liner verwendet, aber Klebeband problemlos abrollbar | 5 | 13 |

## Patentansprüche

1. Klebeband zur Verkapselung elektronischer Aufbauten, umfassend in der nachstehenden Abfolge:
- eine Trägerschicht ohne Barrierewirkung zumindest gegenüber Wasser, die eine WVTR von mindestens 1 g/(m²*d) (gemessen nach ASTM F-1249 bei 38 °C, 90 % relative Feuchte, 50 µm Schichtdicke) aufweist, wobei das Material der Trägerschicht ausgewählt ist aus der Gruppe bestehend aus Polymerfolien, Papieren, Geweben, Vliesen, Folienverbunden und Kombinationen dieser Materialien;
- eine Schicht, enthaltend mindestens ein zur Sorption von mindestens Wasser befähigtes Gettermaterial, wobei das Gettermaterial ausgewählt ist aus der Gruppe bestehend aus Calciumchlorid, Calciumoxid, Bortrioxid, Natriumsulfat, Kaliumcarbonat, Kupfersulfat, Magnesiumperchlorat, Magnesiumsulfat, Zeolithen sowie Mischungen von zwei oder mehreren der vorstehenden Substanzen;
- eine Lage mit Barrierewirkung gegenüber Wasser, die eine WVTR von < 1 g/(m²*d) (gemessen nach ASTM F-1249 bei 38 °C, 90 % relative Feuchte, bezogen auf die Dicke der jeweiligen Lage) aufweist, wobei die Lage mit Barrierewirkung gegenüber Wasser ein Verbund aus einer Polyurethan-, Polypropylen-, Polyethylen-, Polyvinylchlorid-, Polyvinylidenchlorid-, Polyethylen-2,6-naphthalat, Polyacrylnitril-, Polyethylenterephthalat-, EthylenVinylalkohol-Copolymer-, Polyacrylat- oder Poly-ε-caprolactam-Folie und mindestens einer zwischen dieser Folie und der Haftklebmasseschicht angeordneten permeationshemmenden Schicht, eine metallische Folie oder eine Glasfolie ist;
- eine Haftklebmasseschicht;
wobei auf der Trägerschicht eine nach außen weisende Releaseschicht aufliegt und/oder die Haftklebmasseschicht mit einem Releaseliner eingedeckt ist, der eine auf der Haftklebmasseschicht aufliegende Releaseschicht aufweist.

2. Klebeband gemäß Anspruch 1, **dadurch gekennzeichnet, dass** die Trägerschicht ohne Barrierewirkung zumindest gegenüber Wasser
eine Folie, umfassend ein Material ausgewählt aus der Gruppe bestehend aus Ethylenvinylacetat, Polyurethanen, Celluloseacetat, Polymethylmethacrylat, Polyvinylalkoholen und Papier oder
eine mikroperforierte Polyethylenfolie ist.

3. Klebeband gemäß einem der vorstehenden Ansprüche, **dadurch gekennzeichnet, dass** das Gettermaterial als dispergierte Phase vorliegt.

4. Klebeband gemäß Anspruch 3, **dadurch gekennzeichnet, dass** das Gettermaterial als dispergierte Phase in einer Klebmasse vorliegt.

5. Klebeband gemäß einem der vorstehenden Ansprüche, **dadurch gekennzeichnet, dass** die Polymerbasis der Haftklebmasseschicht ausgewählt ist aus der Gruppe bestehend aus Styrolblockcopolymeren, Polyolefinen und Epoxidharzen sowie Gemischen aus zwei oder mehreren dieser Polymere.

6. Klebeband gemäß einem der vorstehenden Ansprüche, **dadurch gekennzeichnet, dass** die Haftklebmasseschicht mit einem Releaseliner eingedeckt ist, der eine auf der Haftklebmasseschicht aufliegende Releaseschicht aufweist, wobei diese Releaseschicht eine Silikon-, fluorierte Silikon-, Silikon-Copolymer-, Fluorpolymer-, Polycarbamat- oder Polyolefin- Releaseschicht ist.

7. Klebeband gemäß einem der Ansprüche 1 bis 5, **dadurch gekennzeichnet, dass** auf der Trägerschicht eine nach außen weisende Releaseschicht aufliegt und diese Releaseschicht eine Silikon-Releasebeschichtung ist.

8. Verwendung eines Klebebandes gemäß einem der vorstehenden Ansprüche zur Verkapselung eines elektronischen Aufbaus.

## Claims

1. Adhesive tape for encapsulating electronic structures, comprising in the following order:
- a carrier layer without a barrier effect at least against water, having a WVTR of at least 1 g/ (m²*d) (measured according to ASTM F-1249 at 38°C, 90% relative humidity, 50 um layer thickness), wherein the material of the carrier layer is selected from the group consisting of polymer films, papers, woven fabrics, nonwovens, film composites and combinations of these materials;
- a layer containing at least one getter material capable of sorption at least of water, wherein the getter material is selected from the group consisting of calcium chloride, calcium oxide, boron trioxide, sodium sulfate, potassium carbonate, copper sulfate, magnesium perchlorate, magnesium sulfate, zeolites and mixtures of two or more of the preceding substances;
- a layer having a barrier effect against water, having a WVTR of < 1 g/(m²*d) (measured according to ASTM F-1249 at 38°C, 90% relative humidity, based on the thickness of the respective layer), wherein the layer having a barrier effect against water is a composite of a polyurethane, polypropylene, polyethylene, polyvinyl chloride, polyvinylidene chloride, polyethylene 2,6-naphthalate, polyacrylonitrile, polyethylene terephthalate, ethylene-vinyl alcohol copolymer, polyacrylate or poly-ε-caprolactam film and at least one permeation-inhibiting layer arranged between this film and the pressure-sensitive adhesive layer, a metallic film or a glass film;
- a pressure-sensitive adhesive layer;
wherein an outward-facing release layer lies on the carrier layer and/or the pressure-sensitive adhesive layer is lined with a release liner that has a release layer lying on the pressure-sensitive adhesive layer.

2. Adhesive tape according to Claim 1, **characterized in that** the carrier layer without a barrier effect at least against water is
a film comprising a material selected from the group consisting of ethylene-vinyl acetate, polyurethanes, cellulose acetate, polymethyl methacrylate, polyvinyl alcohols and paper or
a microperforated polyethylene film.

3. Adhesive tape according to either of the preceding claims, **characterized in that** the getter material is in the form of a dispersed phase.

4. Adhesive tape according to Claim 3, **characterized in that** the getter material is in the form of a dispersed phase in an adhesive.

5. Adhesive tape according to one of the preceding claims, **characterized in that** the polymer base of the pressure-sensitive adhesive layer is selected from the group consisting of styrene block copolymers, polyolefins and epoxy resins and mixtures of two or more of these polymers.

6. Adhesive tape according to one of the preceding claims, **characterized in that** the pressure-sensitive adhesive layer is lined with a release liner that has a release layer lying on the pressure-sensitive adhesive layer, wherein this release layer is a silicone, fluorinated silicone, silicone-copolymer, fluoropolymer, polycarbamate or polyolefin release layer.

7. Adhesive tape according to one of Claims 1 to 5, **characterized in that** an outward-facing release layer lies on the carrier layer and this release layer is a silicone release coating.

8. Use of an adhesive tape according to one of the preceding claims for encapsulating an electronic structure.

## Revendications

1. Ruban adhésif pour encapsuler des montages électroniques, comprenant, dans l'ordre suivant :
- une couche support sans effet barrière au moins vis-à-vis de l'eau, qui présente un TTVE d'au moins 1 g/(m²*d) (mesuré selon ASTM F-1249 à 38 °C, humidité relative 90 %, épaisseur de couche 50 um), le matériau de la couche support étant choisi dans le groupe consistant en les feuilles polymères, les papiers, les tissus, les nontissés, les feuilles composites et les combinaisons de ces matériaux ;
- une couche contenant au moins un matériau sorbeur pouvant sorber au moins l'eau, le matériau sorbeur étant choisi dans le groupe consistant en le chlorure de calcium, l'oxyde de calcium, le trioxyde de bore, le sulfate de sodium, le carbonate de potassium, le sulfate de cuivre, le perchlorate de magnésium, le sulfate de magnésium, les zéolithes, ainsi que le mélange d'au moins deux des substances ci-dessus ;
- une couche ayant un effet barrière vis-à-vis de l'eau, qui présente un TTVE < 1 g/(m²*d) (mesuré selon ASTM F-1249 à 38 °C, humidité relative 90 %, par rapport à l'épaisseur de chaque couche), la couche ayant un effet barrière vis-à-vis de l'eau étant un composé d'une feuille de polyuréthane, de polypropylène, de polyéthylène, de poly(chlorure de vinyle), de poly(chlorure de vinylidène), de poly(2,6-naphtalate d'éthylène), de polyacrylonitrile, de poly(téréphtalate d'éthylène), d'un copolymère éthylène-alcool vinylique, de polyacrylate ou de poly-ε-caprolactame, et d'au moins une couche anti-perméation, disposée entre cette feuille et la feuille de masse adhésive de contact, une feuille métallique ou une feuille de verre ;
- une feuille de masse adhésive de contact ;
une couche antiadhésive dirigée vers l'extérieur étant appliquée sur la couche support, et/ou la couche de masse adhésive de contact étant revêtue d'une bande antiadhésive, qui présente une couche antiadhésive disposée sur la couche de masse adhésive de contact.

2. Ruban adhésif selon la revendication 1, **caractérisé en ce que** la couche support sans effet barrière au moins vis-à-vis de l'eau est une feuille, comprenant un matériau choisi dans le groupe consistant en l'éthylène-acétate de vinyle, les polyuréthanes, l'acétate de cellulose, le poly(méthacrylate de méthyle), les poly(alcools vinyliques) et le papier, ou une feuille de polyéthylène microperforée.

3. Ruban adhésif selon l'une des revendications précédentes, **caractérisé en ce que** le matériau sorbeur se présente sous forme d'une phase dispersée.

4. Ruban adhésif selon la revendication 3, **caractérisé en ce que** le matériau support se présente sous forme d'une phase dispersée dans une masse adhésive.

5. Ruban adhésif selon l'une des revendications précédentes, **caractérisé en ce que** la base polymère de la couche de masse adhésive de contact est choisie dans le groupe consistant en les copolymères à blocs styrène, les polyoléfines et les résines époxydes, ainsi que les mélanges d'au moins deux de ces polymères.

6. Ruban adhésif selon l'une des revendications précédentes, **caractérisé en ce que** la couche de masse adhésive de contact est revêtue d'une bande antiadhésive, qui présente une couche antiadhésive disposée sur la couche de masse adhésive de contact, cette couche antiadhésive étant une couche antiadhésive de silicone, de silicone fluorée, d'un copolymère de silicone, d'un fluoropolymère, de polycarbamate ou de polyoléfine.

7. Ruban adhésif selon l'une des revendications 1 à 5, **caractérisé en ce qu'**une couche antiadhésive dirigée vers l'extérieur est appliquée sur la couche support, cette couche antiadhésive étant un revêtement antiadhésif à base de silicone.

8. Utilisation du ruban adhésif selon l'une des revendications précédentes pour encapsuler un montage électronique.
